(19)

**Europäisches Patentamt**
**European Patent Office**
**Office européen des brevets**

(11) **EP 4 513 245 A1**

(12) **EUROPEAN PATENT APPLICATION**
published in accordance with Art. 153(4) EPC

(43) Date of publication:
**26.02.2025 Bulletin 2025/09**

(21) Application number: **22938591.9**

(22) Date of filing: **27.10.2022**

(51) International Patent Classification (IPC):
**G02B 7/04** (2021.01)    **G02B 7/08** (2021.01)
**H02N 2/04** (2006.01)

(52) Cooperative Patent Classification (CPC):
**G02B 7/04; G02B 7/08; H02N 2/04**

(86) International application number:
**PCT/JP2022/040141**

(87) International publication number:
**WO 2023/203793 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.04.2022 JP 2022068489**

(71) Applicant: **Panasonic Intellectual Property Management Co., Ltd.**
**Kadoma-shi, Osaka 571-0057 (JP)**

(72) Inventor: **UMEDA, Makoto**
**Kadoma-shi, Osaka 571-0057 (JP)**

(74) Representative: **Eisenführ Speiser Patentanwälte Rechtsanwälte PartGmbB Gollierstraße 4 80339 München (DE)**

(54) **OPTICAL DEVICE ACTUATOR AND LENS BARREL PROVIDED WITH SAME**

(57)    An optical device actuator includes a movable frame (33) including a focus lens (L11), a main shaft guide (40), a piezoelectric element (36a), a weight unit (36b), a fixed frame (30), and a spring (36c). The piezoelectric element (36a) applies vibration to the first end (40a) of the main shaft guide (40). The weight unit (36b) has a first weight (36ba), a small diameter portion (36bc), and a second weight (36bb). The first weight (36ba) is fixed to the piezoelectric element (36a) along the axial direction of the main shaft guide (40). The small diameter portion (36bc) is fixed to the end of the first weight (36ba) on the opposite side from the piezoelectric element (36a) in the axial direction of the main shaft guide (40), and is elastic. The second weight (36bb) is fixed to the first weight (36ba) in the axial direction of the main shaft guide (40) via the small diameter portion (36bc).

FIG. 4

## Description

### TECHNICAL FIELD

The present invention relates to an optical device actuator that drives an optical device such as a lens back and forth in the optical axis direction, and a lens barrel equipped with this actuator.

### BACKGROUND ART

A vibration actuator for exciting a guide shaft, such as a smooth impact drive mechanism (SIDM) capable of high-speed response has been used in the past to move a lens frame of a lens barrel back and forth in the optical axis direction.
For example, Patent Literature 1 discloses a drive device including a drive shaft, a piezoelectric element to which a first end of the drive shaft is fixed with an adhesive or the like, a support member that supports the second end side of the drive shaft in a state of being movable parallel to the axial direction, and an external force cushioning support part (spring, etc.) that is attached to the piezoelectric element to moderate the effect of an external force acting on the drive part when the drive part including the drive shaft is subjected to an external force in a direction other than the axial direction.

### CITATION LIST

### PATENT LITERATURE

Patent Literature 1: WO 2014/091656

### SUMMARY

### (TECHNICAL PROBLEM)

However, the following problems are encountered with the conventional drive device configuration discussed above.
With the configuration of the drive device disclosed in the above publication, when an external force is exerted on the drive shaft, etc., in a direction other than the axial direction, the effect of the external force can be moderated by an external force cushioning support part such as a spring.
With a conventional configuration, however, a so-called floating structure is employed in which the first end side of the drive shaft is supported in a state of being movable in the axial direction. In other words, with a conventional configuration, the end of the guide shaft that guides the lens in the optical axis direction is supported in an unstable state. This means that when the drive device is mounted on a lens barrel including a focus lens group, for example, it may be difficult to adjust the optical axes of the focus lens group guided by the guide shaft.
Also, even if a stable ultrasonic vibration amplitude could be obtained with a conventional configuration, if the piezoelectric element were vibrated at a frequency near the peak of a graph showing the gain against frequency in order to obtain an even higher ultrasonic vibration amplitude within the stable region, the vibration would be amplified, and there would be the risk that a mechanically fatal resonance mode would occur, such as when the laminated portion peels off, resulting in a malfunction.
It is an object of the present invention to provide an optical device actuator that can effectively prevent the breakdown of a piezoelectric element due to resonance while ensuring high response characteristics, as well as a lens barrel equipped with this actuator.

### (SOLUTION TO PROBLEM)

The optical device actuator according to the present invention includes a movable frame including a lens, a guide shaft, a vibration application component, a first weight, a first elastic element, a second weight, a first frame, and an elastic member. The guide shaft supports the movable frame so as to be movable in the optical axis of the lens. The vibration application component applies vibration to a side of a first end of the guide shaft. The first weight is fixed to the vibration application component along an axial direction of the guide shaft. The first elastic element is fixed to the end of the first weight on an opposite side from the vibration application component along the axial direction of the guide shaft and has an elasticity. The second weight is fixed to the first weight in the axial direction of the guide shaft via the first elastic element. The first frame supports the vibration application component, the first weight, the first elastic element, and the second weight disposed on the side of the first end of the guide shaft. The elastic member is provided on the side of the first end of the guide shaft, and presses the vibration application component in the axial direction against the first end of the guide shaft via the first weight, the first elastic element, and the second weight.

(EFFECTS)

With the optical device actuator according to the present invention, malfunction of a piezoelectric element due to resonance can be effectively prevented while ensuring high response characteristics.

BRIEF DESCRIPTION OF THE DRAWINGS

Fig. 1 is an oblique view of the configuration of a lens barrel equipped with the optical device actuator according to an embodiment of the present invention;
Fig. 2 is an exploded view of the components constituting the lens barrel in Fig. 1;
Fig. 3 is an exploded view of the components constituting the third and fourth lens group units included in the lens barrel in Fig. 2;
Fig. 4 is a side view showing the direction of vibration applied by the piezoelectric element in the third and fourth lens group units in Fig. 3;
Fig. 5 is a front view of the third and fourth lens group units in Fig. 3 as viewed from the image sensor side;
Fig. 6 is a cross-sectional view along the J-J line in Fig. 5;
Fig. 7 is a diagram showing a fixed frame included in the lens barrel in Fig. 2 as viewed from the image plane side;
Fig. 8 is a cross-sectional view along the L-L line in Fig. 7;
Fig. 9 is an exploded oblique view showing the configuration around the connected portion between the piezoelectric element and the main shaft guide;
Fig. 10 is a cross-sectional view schematically showing the configuration around the piezoelectric element and the configuration of a press-fit portion on a second end side of the main shaft guide;
Fig. 11 is a detail view showing a portion where the main shaft guide is press-fitted into the guide holding frame;
Fig. 12A is a diagram showing an equivalent vibration model in Fig. 10;
Fig. 12B is a diagram showing an equivalent vibration model serving as a comparative example to Fig. 12A;
Fig. 13A is a graph of the results of comparing the frequency response characteristics of the guide shaft and the weight;
Fig. 13B is a graph of the results of comparing the frequency response characteristics of the simplified vibration application mechanisms in Figs. 12A and 12B;
Fig. 14 is a graph of the frequency response characteristics for different ratios of W14 and W15;
Fig. 15 is an oblique view illustrating focus control of the third and fourth lens group units;
Fig. 16 is an exploded oblique view of the configuration near the connected portion between the piezoelectric element and the main shaft guide included in an optical device actuator according to another embodiment of the present invention;
Fig. 17 is a diagram showing an equivalent vibration model of the optical device actuator shown in Fig. 16;
Fig. 18 is a graph of the results of an experiment comparing the configuration in Fig. 16 with the configuration of a comparative example;
Fig. 19 is an enlarged graph of the band portion actually used in the graph of Fig. 18;
Fig. 20 is an exploded oblique view of a configuration including a three-stage weight unit included in an optical device actuator according to yet another embodiment of the present invention;
Fig. 21 is an abstract model of the configuration of a conventional example (Patent Application No. 2020-566172) used for simulation, as a comparative example of the configuration shown in Fig. 20;
Fig. 22 shows a simulation model of the weight unit in Fig. 20, and is an exploded oblique view of a configuration in which the weight unit model serving as a comparative example shown in Fig. 21 is divided into three stages;
Fig. 23 is a detail view of the divided first to third weight unit models included in Fig. 22;
Fig. 24A is a graph of the responsiveness of the simulation model of the embodiment shown in Fig. 20; and
Fig. 24B is a detail view of the A portion in Fig. 24A.

DESCRIPTION OF THE EMBODIMENTS

Embodiments will now be described through reference to the drawings. However, some unnecessarily detailed description may be omitted. For example, detailed description of already known facts or redundant description of components that are substantially the same may be omitted. This is to avoid unnecessary repetition in the following description, and facilitate an understanding on the part of a person skilled in the art.

The applicant has provided the appended drawings and the following description so that a person skilled in the art might fully understand this disclosure, but does not intend for these to limit what is discussed in the patent claims.

Embodiment 1

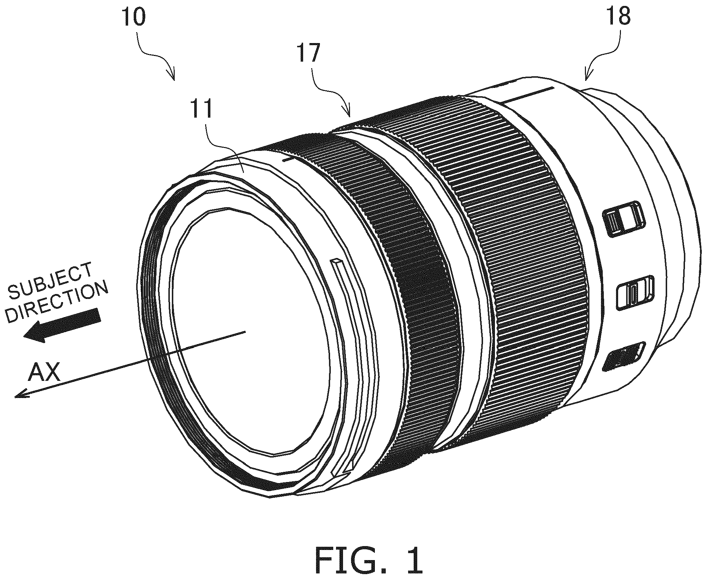

A lens barrel 10 equipped with the optical device actuator according to an embodiment of the present invention will now be described with reference to Figs. 1 to 15.

(1) Lens Barrel Configuration

The lens barrel 10 according to this embodiment includes an optical system including a plurality of lenses, a first lens group unit 11, a second lens group unit 12, a cam frame 13, a third and fourth lens group unit 14, a fifth lens group unit 16, an exterior unit 17, and a base ring 18. The lens barrel 10 is mounted to a mounting portion of a camera body (not shown ) at the base ring 18.

The optical axis AX direction shown in Fig. 1 here is the optical axis direction of the optical system of the lens barrel 10. In the following, the subject side in the optical axis direction means the opposite side from the image plane side on which the imaging element (not shown) of the camera body is disposed. The optical axis direction of the optical system of the lens barrel 10 shall be the optical axis AX direction.

(1-1) Optical System Configuration

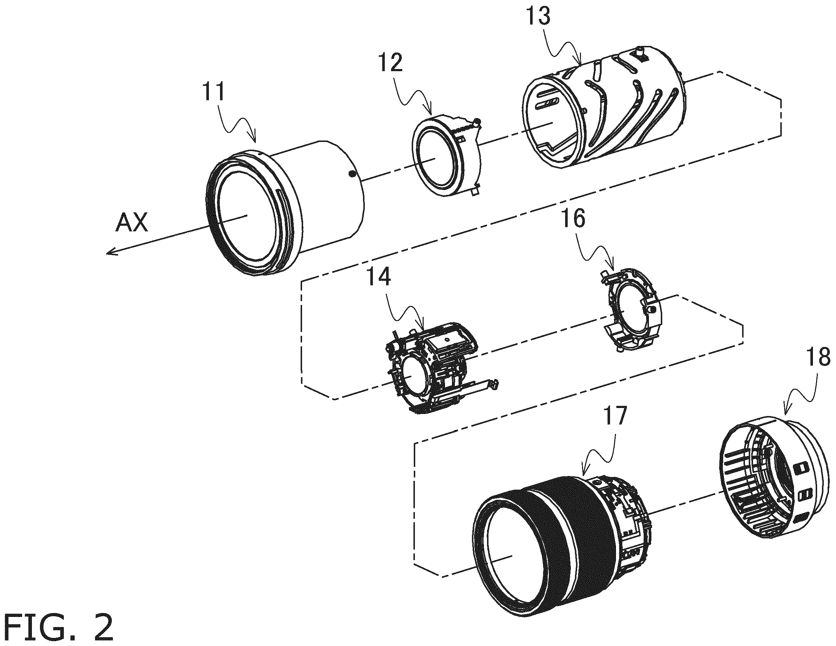

As shown in Fig. 2, the optical system of lens barrel 10 is made up of the first lens group unit 11, the second lens group unit 12, the cam frame 13, the third and fourth lens group unit 14, the fifth lens group unit 16, the exterior unit 17, the base ring 18, etc.

The first lens group unit 11 is a cylindrical member, and a plurality of lenses are disposed in its interior on the subject side. The first lens group unit 11 moves forward and backward along the optical axis AX while holding the plurality of lenses on the subject side.

This allows the distance between the lenses to be varied, making it possible to perform wide-angle and telephoto photography.

The second lens group unit 12 is a cylindrical member disposed on the inner peripheral surface side of the first lens group unit 11. The second lens group unit 12 holds a plurality of lenses. The lenses included in the second lens group unit 12 are disposed closer to the image plane side in the optical axis AX direction than the lenses included in the first lens group unit 11.

As shown in Fig. 2, the cam frame 13 is a cylindrical member in which cam grooves are formed. The cam frame 13 is disposed on the outer peripheral surface side of the second lens group unit 12 and the third and fourth lens group unit 14. Cam pins provided on the outer peripheral surface of the third and fourth lens group unit 14 are fitted into the cam grooves of the cam frame 13.

The third and fourth lens group unit 14 is a focusing unit that includes a focus lens L11, and is similar to the first lens group unit 11 and the second lens group unit 12 in that it holds a plurality of lenses.

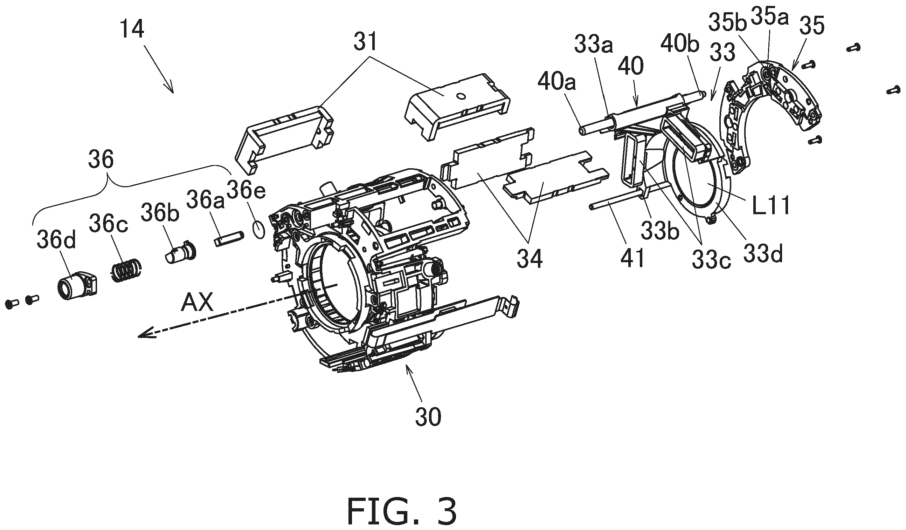

The third and fourth lens group unit 14 is a substantially cylindrical member and holds a plurality of lenses. As shown in Fig. 2, the lenses included in the third and fourth lens group unit 14 are disposed closer to the image plane side in the optical axis AX direction than the lenses included in the second lens group unit 12. Also, as shown in Fig. 3, the third and fourth lens group unit 14 holds the focus lens L11. The focus lens L11 is disposed closest to the image plane side in the optical axis AX direction out of all the lenses included in the third and fourth lens group unit 14. Furthermore, as shown in Fig. 3, the third and fourth lens group unit 14 is configured to include main yokes 31 and counter yokes 34 disposed around the outer periphery of a substantially cylindrical fixed frame 30, and a drive coil 33c disposed on a movable frame 33. Consequently, the third and fourth lens group unit 14 is driven by a drive unit including the drive coil 33c, etc., which moves the movable frame 33 including the focus lens L11 back and forth in the optical axis AX direction while holding the plurality of lenses.

Cam pins protruding from the outer peripheral surface of the third and fourth lens group unit 14 (fixed frame 30) receive a rotational drive force applied from a rotational drive source and move along cam grooves formed in the cam frame 13. This allows the lenses included in the first lens group unit 11 to the third and fourth lens group unit 14 to be moved back and forth in the optical axis AX direction to adjust the distance between the lenses, so that wide-angle photography, telephoto photography, and so forth can be performed.

The configuration of the third and fourth lens group unit 14 will be described in detail below.

As shown in Fig. 2, the fifth lens group unit 16 is a substantially cylindrical member disposed around the inner peripheral surface side of the first lens group unit 11. The fifth lens group unit 16 holds a plurality of lenses. Also, the cam frame 13 is attached to the fifth lens group unit 16 in a state that allows relative rotation.

As shown in Fig. 2, the exterior unit 17 is a cylindrical member constituting the exterior portion of the lens barrel 10. An annular focus ring, zoom ring, etc., are rotatably attached to the outer peripheral surface of the exterior unit 17.

The base ring 18 is attached to the end of the exterior unit 17 on the image plane side, and along with the exterior unit 17 constitutes the exterior part of the lens barrel 10. The base ring 18 is then attached to the camera body (not shown ).

(1-2) Configuration of Third and Fourth Lens Group Unit 14

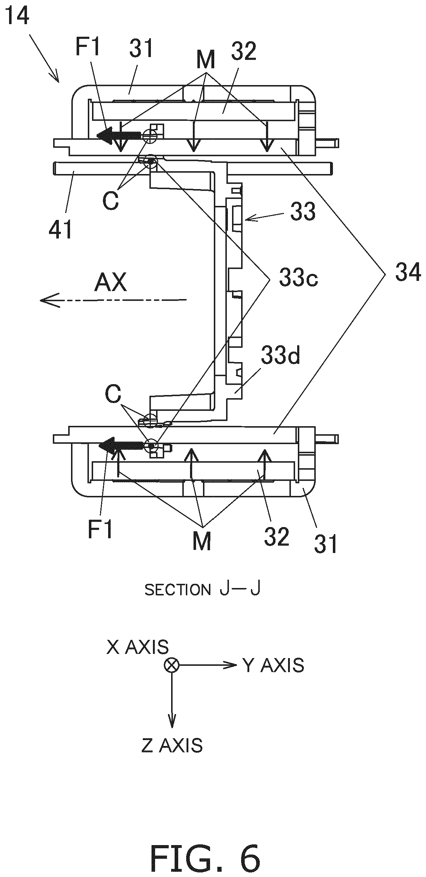

The lens barrel 10 of this embodiment is a lens unit that moves the focus lens L11 held by a movable frame 33 back and forth in the optical axis AX direction. More specifically, the third and fourth lens group unit 14 constituting the lens barrel 10 includes the fixed frame 30, the main yokes 31, magnets (drive units) 32 (see Fig. 6, etc.), the movable frame 33, a main shaft guide (guide shaft) 40, a sub-shaft guide 41, the counter yokes 34, a guide holding frame (second frame) 35, and a vibration application mechanism (vibration application component) 36.

In the third and fourth lens group unit 14, the fixed frame (first frame) 30, the movable frame 33 that holds the focus lens L11, the main shaft guide 40, the guide holding frame (second frame) 35, and the vibration application mechanism 36 constitute an optical device actuator that moves the movable frame 33 back and forth along the optical axis AX.

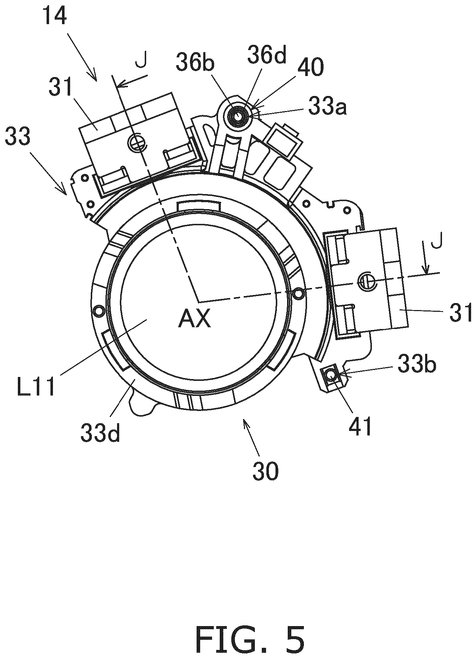

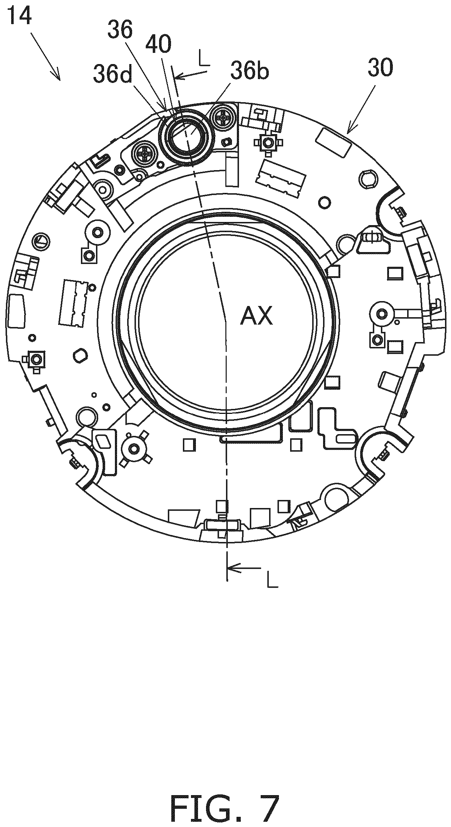

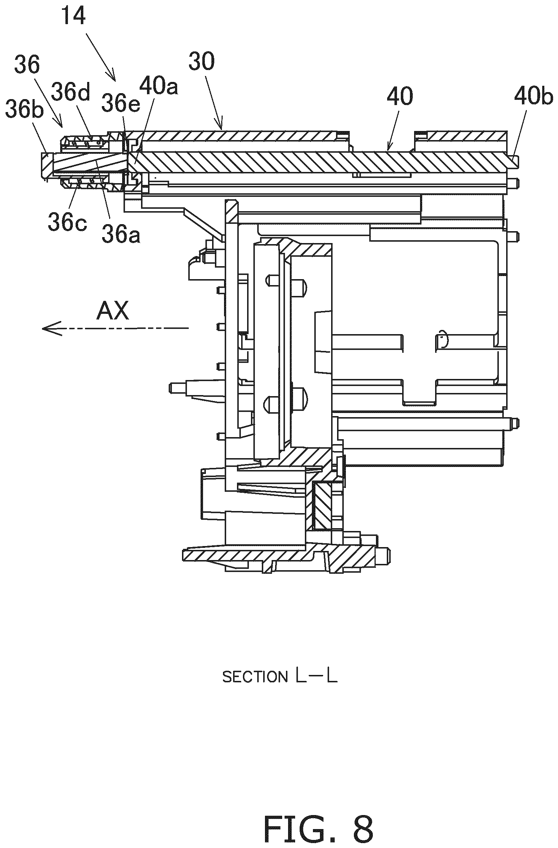

Figs. 3 to 8 show the configuration of the third and fourth lens group unit 14. Fig. 6 is a cross-sectional view along the J-J line in Fig. 5, and Fig. 8 is a cross-sectional view along the L-L line in Fig. 7.

The fixed frame 30 is a substantially cylindrical member that constitutes the outer shell of the third and fourth lens group unit 14, and the main yokes 31, the magnets 32, the movable frame 33, the main shaft guide (guide shaft) 40, the sub-shaft guide 41, etc., are disposed therein. Part of the fixed frame 30 is used as the first frame constituting the optical device actuator (discussed below).

As shown in Figs. 3 and 6, each main yoke 31 is a substantially U-shaped member when viewed from the side, and two main yokes 31 are provided on the outer peripheral surface side of the fixed frame 30 as shown in Fig. 5.

As shown in Fig. 6, the magnets 32 are provided within the substantially U-shaped portion of the main yokes 31, and constitute an actuator that drives the movable frame 33 together with the drive coil 33c (discussed below). The magnets 32 generate a magnetic field M in the Z direction (inward in the radial direction) indicated by the arrow in Fig. 6. More precisely, the magnet 32 disposed on the upper side in Fig. 6 generates a magnetic field M in the downward direction in the drawing, and the magnet 32 disposed on the lower side generates a magnetic field M in the upward direction in the drawing.

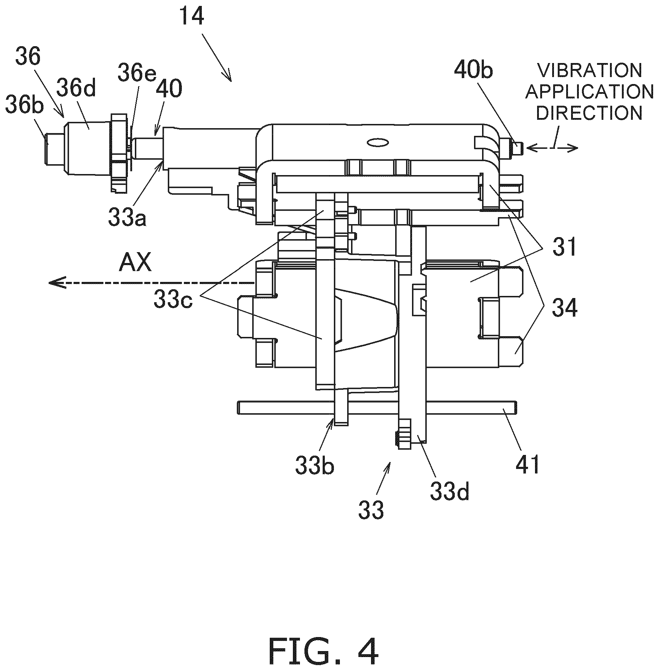

As shown in Figs. 4 and 6, the movable frame 33 is able to move back and forth in the optical axis AX direction relative to the fixed frame 30, and has a main shaft bearing 33a, a sub-shaft bearing 33b, the drive coil 33c, and a main body part 33d.

The main shaft bearing 33a is a through-hole formed in the main body part 33d in the optical axis AX direction, into which the main shaft guide 40 is inserted.

Similar to the main shaft bearing 33a, the sub-shaft bearing 33b is a through-hole formed in the main body part 33d in the optical axis AX direction, into which the sub-shaft guide 41 is inserted.

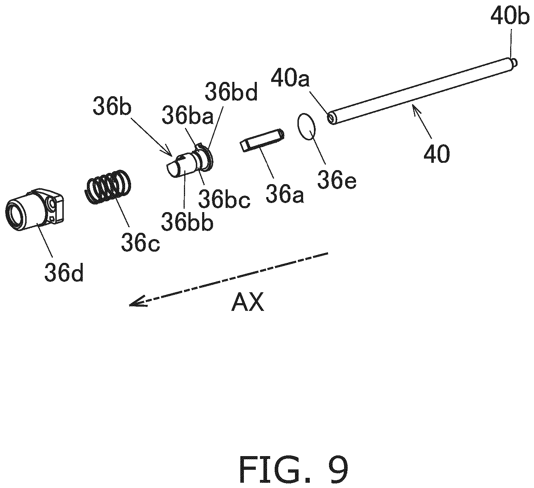

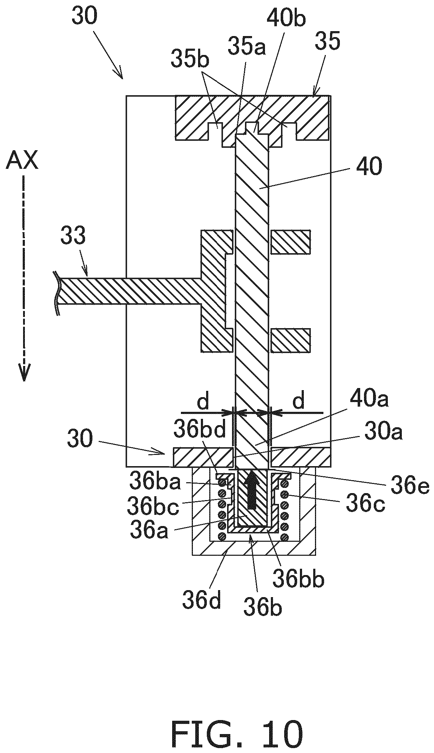

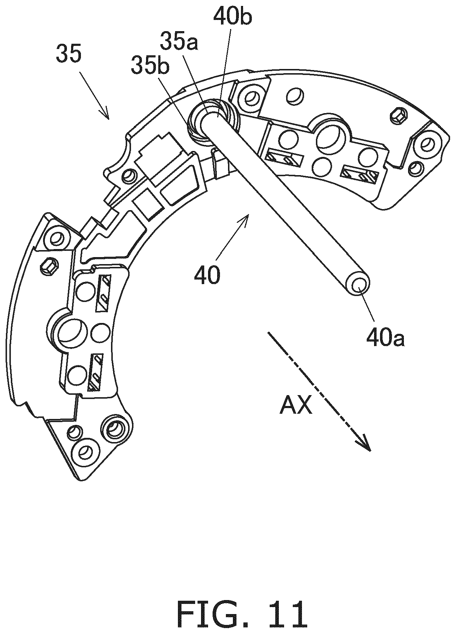

The main shaft guide 40 is slidably engaged with the main shaft bearing 33a, and is disposed along the optical axis AX direction as a guide member when the movable frame 33 is moved relative to the fixed frame 30, as shown in Figs. 3 and 4. The first end 40a of the main shaft guide 40 in the optical axis AX direction is connected to the vibration application mechanism 36 (piezoelectric element 36a; see Figs. 8 and 9). The second end 40b on the opposite side from the first end 40a is supported in a fixed state in a press-fitting hole 35a (see Figs. 10 and 11) formed in the guide holding frame 35. As shown in Fig. 4, when the movable frame 33 is moved, a specific vibration is applied to the main shaft guide 40 from the vibration application mechanism 36 (discussed below) in the vibration application direction in the drawing.

As shown in Fig. 10, the first end 40a of the main shaft guide 40 is inserted into an insertion hole 30a formed in the fixed frame 30. An annular gap d is formed between the inner peripheral surface of the insertion hole 30a and the outer peripheral surface of the main shaft guide 40. The annular gap d is formed so as to surround the outer peripheral surface of the main shaft guide 40.

The sub-shaft guide 41 is inserted into the sub-shaft bearing 33b and is disposed substantially parallel to the main shaft guide 40, as shown in Figs. 3 and 4. One end of the sub-shaft guide 41 in the optical axis AX direction is held by the fixed frame 30, and the opposite end is held by the guide holding frame 35 (discussed below). The sub-shaft guide 41 functions as a guide member for the movable frame 33 so as to maintain the orientation of the movable frame 33 along with the main shaft guide 40 when the movable frame 33 moves back and forth in the optical axis AX direction along the main shaft guide 40.

As shown in Fig. 6, the drive coil 33c is fixed to the main body part 33d side of the movable frame 33, and is disposed near the main yokes 31 and the magnets 32 fixed on the fixed frame 30 side. When the movable frame 33 is moved, current flows through the drive coil 33c in the X axis direction perpendicular to the plane of the drawing, as shown in Fig. 6.

Consequently, as shown in Fig. 6, the magnetic field directed inward in the radial direction that is generated by the magnets 32, and the current flowing through the drive coil 33c can generate a Lorentz force F1 in the Y axis direction (to the left) in the movable frame 33. When current flows through the drive coil 33c, the movable frame 33 therefore moves back and forth in the optical axis AX direction.

In the lens barrel 10 of this embodiment, the thrust applied to the movable frame 33 depends on the Lorentz force F1 generated by the magnets 32 and the drive coil 33c. That is, in this embodiment, the thrust on the movable frame 33 does not depend on the vibration applied from the vibration application mechanism 36 (discussed below).

As shown in Fig. 5, the main body part 33d holds the focus lens L11 at its center portion. The main shaft guide 40 and the sub-shaft guide 41 are inserted into the main shaft bearing 33a and the sub-shaft bearing 33b provided on the outer peripheral side of the portion of the main body part 33d that holds the focus lens L11.

The counter yoke 34 is attached so as to cover the opening of the substantially U-shaped main yoke 31.

As shown in Fig. 3, the guide holding frame 35 is disposed on the image plane side of the movable frame 33, on the opposite side from the subject side in the optical axis AX direction. The guide holding frame 35 holds the ends of the main shaft guide 40 (second end 40b side) and the sub-shaft guide 41 at positions on the image plane side of the movable frame 33.

Also, the guide holding frame 35 has a press-fitting hole 35a into which the second end 40b of the main shaft guide 40 is press-fitted, and a groove portion 35b formed concentrically with the press-fitting hole 35a on the outer peripheral side of the press-fitting hole 35a (see Figs. 10 and 11 ).

The focus control of the third and fourth lens group unit 14 will now be described.

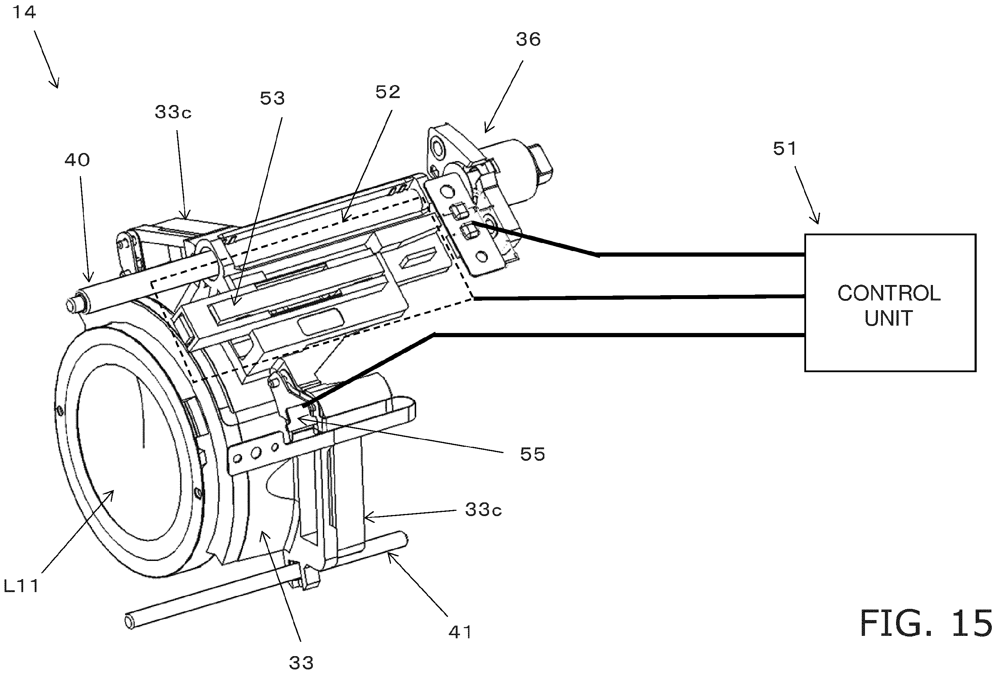

In Fig. 15, a position sensor 52 is made up of a sensor magnet 53 fixed to the movable frame 33, and an MR element (not shown) fixed to the fixed frame 30 so as to be opposite the sensor magnet 53. The position sensor 52 may be constituted by an encoder, and may be anything that can sense the position of the movable frame 33 relative to the fixed frame 30.

The position sensor 52 is electrically connected to the control unit 51, and outputs the amount of movement of the sensor magnet 53 in the optical axis direction to the control unit 51. A coil terminal portion 55 of the drive coil 33c is electrically connected to the control unit 51.

The control unit 51 can move the movable frame 33 to the desired position by passing a drive current through the drive coil 33c based on the current position of the movable frame 33 obtained from the position sensor 52.

Furthermore, the control unit 51 is also electrically connected to the vibration application mechanism 36 and can control the operation of the vibration application mechanism 36.

In this embodiment, the control unit 51 is configured such that the amount of vibration and the vibration frequency of the vibration application mechanism 36 can be varied freely according to the current position and speed of the movable frame 33. For example, it is preferable for the vibrating speed of the main shaft guide shaft to be higher than the moving speed of the movable frame 33.

Consequently, the relative speed between the main shaft guide 40 and the movable frame 33 fluctuates above and below zero. This allows the friction component whose direction is reversed depending on the speed to be canceled out.

Also, in this embodiment, when the movable frame 33 moves, the control unit 51 controls the vibration application mechanism 36 so that the main shaft guide 40 vibrates at a speed that is at least twice the moving speed of the movable frame 33, within a range that does not exceed the limit of mechanical strength.

This is because if the vibration is at less than twice the speed, when the vibration of the main shaft guide 40 is reversed, the relative speed between the movable frame 33 moved by the drive coil 33c and the main shaft guide 40 vibrated by the vibration application mechanism 36 will be nearly zero, the friction component whose direction reverses depending on the speed cannot be sufficiently canceled out, loads such as static friction will increase between the main shaft guide 40 and the movable frame 33, and the vibration application mechanism 36 will have unintended effects on the movable frame 33.

(1-3) Configuration of Vibration Application Mechanism 36

As shown in Figs. 3 and 4, the vibration application mechanism 36 applies vibration to the main shaft guide 40 in a direction substantially parallel to the axial direction of the main shaft guide 40, and is disposed at a position where it makes contact with the end (first end 40a) of the main shaft guide 40 on the subject side, as shown in Figs. 7 and 8. As shown in Fig. 3, the vibration application mechanism 36 has a piezoelectric element 36a, a weight unit 36b, a spring 36c, a holder (first frame) 36d, and a cushioning sheet (cushioning material) 36e.

In this embodiment, the vibration application mechanism 36 is controlled so as to apply vibration within a range of 20 to 60 kHz, for example.

The piezoelectric element 36a generates a force when voltage is applied, and generates ultrasonic vibrations by repeatedly expanding and contracting when AC voltage is applied. The piezoelectric element 36a is used as an ultrasonic transducer that applies a specific ultrasonic vibration to the main shaft guide 40 in order to reduce frictional resistance generated between the movable frame 33 (main body part 33d) and the main shaft guide 40.

The application of vibration to the main shaft guide 40 by the piezoelectric element 36a will be discussed in detail below.

The weight unit 36b is a bottomed, substantially cylindrical member, and is connected to the end of the piezoelectric element 36a on the subject side as shown in Fig. 9. Also, the end of the piezoelectric element 36a on the opposite side from the side connected to the first end 40a of the main shaft guide 40 is fixed with an adhesive agent to the bottom surface of the weight unit 36b. As shown in Figs. 9 and 10, the weight unit 36b has a multi-stage configuration including two weights (first and second weights 36ba and 36bb), and has the first weight 36ba, the second weight 36bb, a small diameter portion 36bc, and a flange 36bd.

As shown in Fig. 9, the first weight 36ba is disposed on the side where the piezoelectric element 36a is inserted, and is fixed to the end of the piezoelectric element 36a. The flange 36bd is provided on the outer peripheral surface of the first weight 36ba. The first weight 36ba has a mass ratio of 2:1 to the second weight 36bb, for example. That is, the first weight 36ba has about two-thirds the mass of the entire weight unit 36b.

The second weight 36bb is linked to the first weight 36ba via the small diameter portion 36bc in the axial direction of the main shaft guide 40, and is formed so as to include the bottom portion of the bottomed, substantially cylindrical weight unit 36b. As discussed above, the second weight 36bb has a mass ratio of 1:2 to the first weight 36ba, for example. That is, the second weight 36bb has about one-third the mass of the entire weight unit 36b.

Thus setting the masses of the first weight 36ba and the second weight 36bb to be different rather than equal allows the vibration modes of the first weight 36ba and the vibration mode of the second weight 36bb to be designed independently even though, in principle, there are constraints on the spring constant of the elastic element connecting the two.

The small diameter portion 36bc is a portion that links the first weight 36ba and the second weight 36bb, and has a smaller outside diameter than the first weight 36ba and the second weight 36bb. Therefore, the small diameter portion 36bc is thinner than the first and second weights 36ba and 36bb, and as such is less rigid, and functions as an elastic element (first elastic element). That is, the small diameter portion 36bc is fixed to the end of the first weight 36ba on the opposite side from the piezoelectric element 36a in the axial direction of the main shaft guide 40, and has an elasticity.

The flange 36bd is formed at the end portion of the outer peripheral surface of the substantially cylindrical weight unit 36b on the image plane side, which is the opposite side from the subject side. The flange 36bd is formed in a substantially annular shape protruding radially outward from the outer peripheral surface of the weight unit 36b, and is pressed in the axial direction of the main shaft guide 40 by a spring 36c (discussed below).

As shown in Fig. 9, the spring 36c is an elastic member formed as a solenoid spring, and is attached on the outer peripheral surface side of the weight unit 36b. As shown in Fig. 10, one end of the spring 36c is engaged with the flange 36bd of the weight unit 36b, and the end on the opposite side is held inside the holder 36d, and is disposed in a compressed state in the holder 36d.

Consequently, the spring 36c presses the piezoelectric element 36a toward the end surface of the first end 40a of the main shaft guide 40 via the weight unit 36b, in the axial direction of the main shaft guide 40 (the optical axis AX direction). That is, the spring 36c is provided to transmit the behavior of the piezoelectric element 36a to the main shaft guide 40 by biasing the piezoelectric element 36a in the direction of vibrating the main shaft guide 40.

Also, when an external force is exerted in a direction intersecting the axial direction of the main shaft guide 40, the spring 36c supports the main shaft guide 40 in a state of being able to move in a direction intersecting the axial direction. This prevents the connected portion between the end surface on the first end 40a side of the main shaft guide 40 and the opposing end surface of the piezoelectric element 36a from being crushed.

Furthermore, the surface of the spring 36c is coated with anti-vibration grease. This improves the anti-vibration performance of the vibration application mechanism 36.

That is, with the configuration of this embodiment, the first end 40a side of the main shaft guide 40 is fixed to the inner surface side of the holder 36d (discussed below) via the weight unit 36b and the spring 36c.

As shown in Figs. 9 and 10, the holder 36d is a bottomed, substantially cylindrical member, and the piezoelectric element 36a, the weight unit 36b, and the spring 36c are enclosed in its cylindrical internal space. As discussed above, the holder 36d supports the subject-side end of the enclosed spring 36c on the bottom surface. Furthermore, as shown in Fig. 10, the holder 36d is fixed to the fixed frame 30 so as to cover the insertion hole 30a formed in the fixed frame 30.

Consequently, the holder 36d constitutes a first frame along with part of the fixed frame 30.

The cushioning sheet 36e is a sheet-like member formed from a polyimide resin or the like, for example, and as shown in Figs. 9 and 10, is held by the biasing force of the spring 36c between the end surface of the main shaft guide 40 on the first end 40a side (subject side) and the end surface of the piezoelectric element 36a on the image plane side. The end surface of the main shaft guide 40 on the first end 40a side and the opposing end surface of the piezoelectric element 36a are connected via the cushioning sheet 36e.

Applying Vibration to Main Shaft Guide 40

In this embodiment, the piezoelectric element 36a applies a specific ultrasonic vibration to the main shaft guide 40 along the vibration application direction shown in Fig. 4 (a direction substantially parallel to the axial direction) so that the static friction generated between the movable frame 33 (main body part 33d) and the main shaft guide 40 changes to kinetic friction.

The piezoelectric element 36a is made of a piezoelectric ceramic, such as lead zirconate titanate ($Pb(ZrTi)O_3$), barium titanate ($BaTiO_3$), or lead titanate ($PbTiO_3$), for example.

"Ultrasonic vibration" is an elastic vibration wave (sound wave) with a high frequency that is inaudible to the human ear (such as a sound with a frequency of 20 kHz or more that cannot be perceived by the ear as a steady sound), and in a broad sense refers to a sound that is used for purposes other than for humans to hear, regardless of whether or not it is actually audible to humans.

Here, if we let $\alpha$ be the acceleration at which the main shaft guide 40 is vibrated by the ultrasonic vibration, and let mk be the mass of the movable frame 33, then the force required for the movable frame 33 to vibrate at the same acceleration $\alpha$ as the main shaft guide 40 is $\alpha \times$ mk. Also, the force that can be transmitted from the main shaft guide 40 to the movable frame 33 is the friction force T at work between the main shaft guide 40 and the movable frame 33.

In a state of $T \geq \alpha \times$ mk, the main shaft guide 40 and the movable frame 33 move more or less integrally.

That is, the movable frame 33 vibrates at the acceleration $\alpha$ to match the vibration of the main shaft guide 40 with the acceleration $\alpha$ produced by the piezoelectric element 36a. At this time, the force (friction force T) that can be transmitted to the movable frame 33 is equal to or greater than the force ($\alpha \times$ mk) required for the movable frame 33 to vibrate at the acceleration $\alpha$. Therefore, the vibration of the main shaft guide 40 is transmitted to the movable frame 33 at the same acceleration $\alpha$, and the main shaft guide 40 and the movable frame 33 move more or less integrally, with no slippage relative to each other.

On the other hand, when $T < \alpha \times$ mk (relational formula (1)), the main shaft guide 40 and the movable frame 33 do not move integrally, and relative slippage occurs.

That is, even if the piezoelectric element 36a vibrates the main shaft guide 40 at the acceleration $\alpha$, the movable frame 33 cannot vibrate at the acceleration $\alpha$, or does not vibrate, or vibrates at an acceleration less than the acceleration $\alpha$. When vibrating at an acceleration less than the acceleration $\alpha$, the amplitude of the movable frame 33 becomes smaller than the amplitude of the main shaft guide 40. At this time, the force (friction force T) that can be transmitted to the movable frame 33 is smaller than the force ($\alpha \times$ mk) required for the movable frame 33 to vibrate at the acceleration $\alpha$. Therefore, the vibration of the main shaft guide 40 cannot be transmitted to the movable frame 33 at the same acceleration $\alpha$, and relative slippage occurs between the main shaft guide 40 and the movable frame 33.

Also, in a state of $T < \alpha \times$ mk, as long as the vibration produced by the piezoelectric element 36a continues, relative slippage will continue to occur between the main shaft guide 40 and the movable frame 33. In this state, the friction between the main shaft guide 40 and the movable frame 33 is kinetic friction rather than static friction.

That is, as long as the vibration produced by the piezoelectric element 36a continues in the state of $T < \alpha \times$ mk, a state of dynamic friction will always be maintained between the main shaft guide 40 and the movable frame 33. In general, dynamic friction force is weaker than static friction force. Therefore, when a state in which dynamic friction is being generated is maintained, the movable frame 33 can be driven with a lower drive force than that in a state in which static friction is being generated.

Also, while a state of dynamic friction is maintained, there will be no so-called stick-slip phenomenon, which occurs when an object starts to move and transitions from a static friction state to a dynamic friction state. Consequently, since the dynamic friction state is maintained, an object can be moved with a low drive force without any stick-slip occurring, which is advantageous for high-precision drive in small movement amounts.

Furthermore, in a state of $T < \alpha \times$ mk, the movable frame 33 vibrates at an acceleration that is lower than the acceleration $\alpha$. That is, the movable frame 33 may vibrate at a smaller amplitude than that of the main shaft guide 40. This vibration amount is smaller than the amplitude of the main shaft guide 40 and smaller than the amplitude of the piezoelectric element 36a. The amplitude of the piezoelectric element 36a is sufficiently smaller than the precision required for position control of the driven body (movable frame 33), such as 1/10 or less. Therefore, even if the driven body (the movable frame 33) is vibrated by the piezoelectric element 36a, this will not pose any problem in terms of position control.

Consequently, the ultrasonic vibration applied from the piezoelectric element 36a to the main shaft guide 40 can effectively reduce frictional resistance at the portion of the movable frame 33 where the main body part 33d makes contact with the main shaft guide 40. As a result, the movable frame 33 can be moved to the desired position at high speed and with high precision by the Lorentz force F1 (see Fig. 6) generated by the actuator (the magnets 32 and the drive coil 33c).

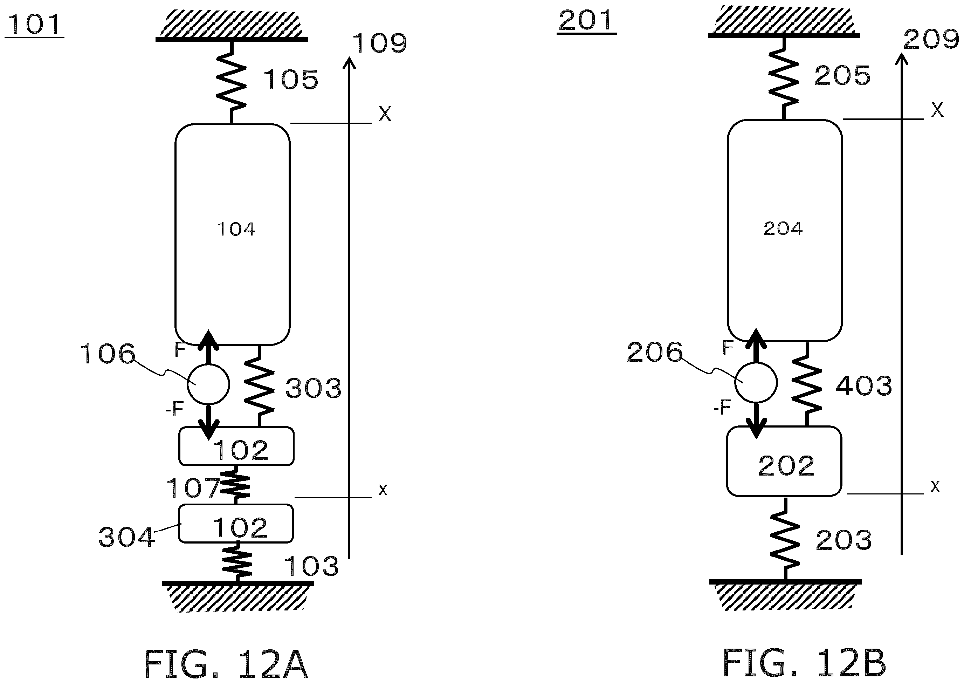

Fig. 12A is an equivalent vibration model showing the configuration of a vibration application mechanism 101, which is a simplification of the vibration application mechanism 36 of the present invention. Fig. 12B is an equivalent vibration model showing the configuration of a vibration application mechanism 201, which is a comparative example of the vibration application mechanism 36 of the present invention.

That is, with the configuration of the vibration application mechanism 101 of the present invention shown in Fig. 12A, the weight unit 36b is multi-staged into two stages (first and second weights 36ba and 36bb), which are linked together via an elastic element (small diameter portion 36bc). By contrast, with the configuration of the vibration application mechanism 201 of the comparative example shown in Fig. 12B, the weight unit 36b is configured as a single rigid body.

102 and 202 indicate a configuration corresponding to an abstract mass element obtained by adding up the masses of the piezoelectric element 36a and the weight unit 36b, and 303 and 403 indicate a configuration corresponding to a spring element made of the material of the piezoelectric element 36a. 103 and 203 indicate a configuration corresponding to the spring 36c, 104 and 204 to the main shaft guide 40, and 105 and 205 to the groove portion 35b. 106 and 206 indicate a configuration corresponding to an abstracted version of the thrust generating portion of the piezoelectric element 36a, 107 to the small diameter portion (first elastic element) 36bc of the present invention, and 304 to the second weight connected to 102 by 107.

Also, x and X indicate positions of the weight unit 36b and the main shaft guide 40 in the axial directions 109 and 209, and F and (-F) are the excitation force (expansion and contraction force) generated at the above 106 of the piezoelectric element 36a. The cushioning sheet 36e is omitted in the simplified vibration application mechanisms 101 and 201.

First, the following equation (100) shows the transfer function from the excitation force (-F) to the weight position x of the vibration application mechanism 201, which is a simplified comparative example shown in Fig. 12B, and the following equation (101) shows the transfer function from the excitation force F to the main shaft guide position X.

Numerical Equation 1

$$x/F = \frac{1}{m1} \frac{S^2 + W1^2}{S^4 + (W3^2 + W4^2)S^2 + W3^2 \cdot W4^2} \quad \text{equation (100)}$$

Numerical Equation 2

$$X/F = \frac{1}{m2} \frac{S^2 + W2^2}{S^4 + (W3^2 + W4^2)S^2 + W3^2 \cdot W4^2} \quad \text{equation (101)}$$

Equations (100) and (101) are expressed as general frequency response characteristics, where $s = j\omega$ ($j$ is an imaginary unit and $\omega$ is the angular frequency), and $\omega = 2\pi f$ ($f$ is the frequency (Hz)). In equation (100), m1 represents the combined mass (kg) of the piezoelectric element 36a and the weight unit 36b, and m2 in equation (101) represents the mass (kg) of the main shaft guide 40.

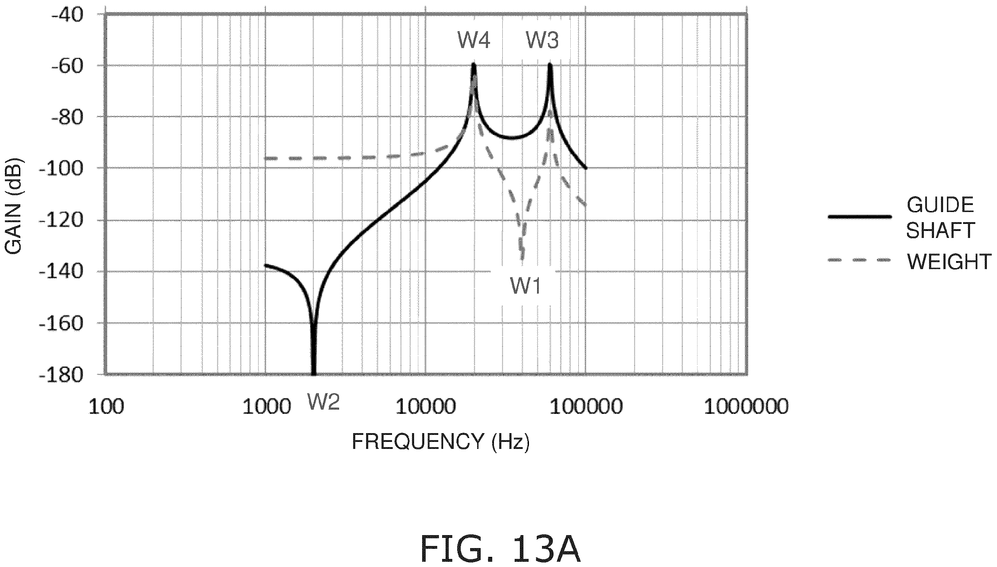

The characteristics of formulas (100) and (101) are expressed by a quadratic form having anti-resonance points at W1 and W2 and resonance points at W3 and W4 (see Fig. 13A). In this configuration, the following relational expressions are satisfied.

$$W4 < W1 < W3$$

$$W2 \times 10 < W4$$

$$20 \times 1000 < W4/2\pi$$

$$50 \times 1000 < W3/2\pi$$

(In the above equations, W1, W2, W3, and W4 are in radians/second.)

Here, the vibration characteristic on the main shaft guide 40 side is expressed by equation (101) in the configuration of the comparative example, and is expressed by equation (102) in the configuration of this embodiment.

Numerical Equation 3

$$X/F = + \frac{1}{m2} \frac{S^4 + W12^2 S^2 + W14^4}{S^6 + W13^4 S^4 + W15^2 S^2 + W16^2} \quad \text{equation (102)}$$

The coefficients in the formula (102) are:

$$W12^2 = k1/m2 + k3/m2 + k3/m3$$

$$W13^4 = k2/m2 \times k4/m2$$

$$W14^2 = k1/m1 + k2/m1 + k3/m2 + k3/m3 + k4/m3$$

$$W15^4 = k1/m1 \times k2/m2 + k1/m1 \times k3/m3 + k1/m1 \times k4/m2 + k1/m1 \times k4/m3 + k2/m1 \times k3/m2 + k2/m1 \times k3/m3$$

$$W16^6 = k1/m1 \times k2/m2 \times k3/m3 + k1/m1 \times k3/m3 \times k4/m2 + k2/m2 \times k3/m3 \times k4/m1$$

(k1: spring constant of a fixed member that biases the second end 40b of the main shaft guide 40 from the outside in the direction of the optical axis AX, k2: spring constant of the piezoelectric element 36a, k3: spring constant acting between the first and second weights 36ba and 36bb, k4: spring constant of the spring 36c, m1: mass of the main shaft guide 40, m2: total mass of the piezoelectric element 36a and the weight unit 36b, m3: mass of the first weight 36ba, f: expansion and contraction force of the piezoelectric element 36a)

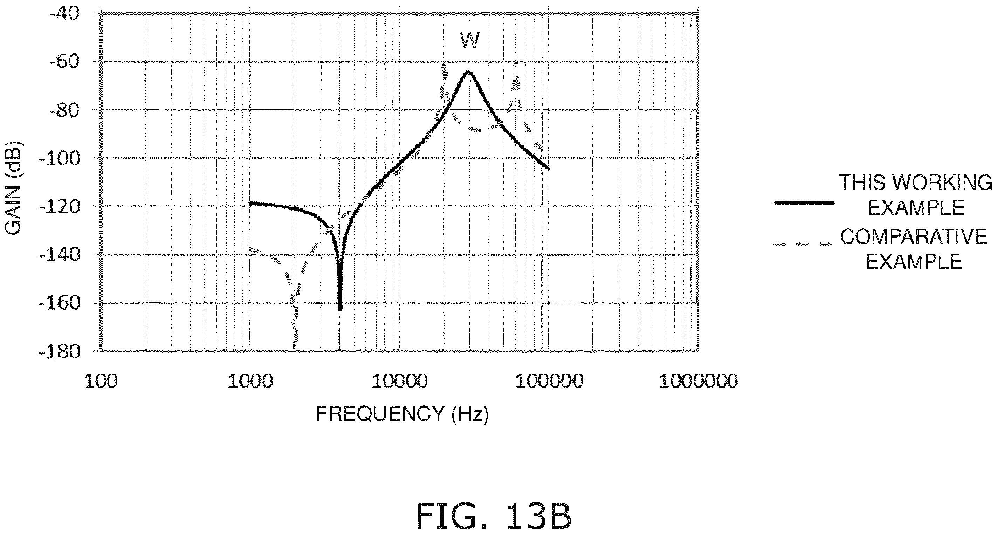

Here, the results of comparing the calculated values of formula (101) of the comparative example and formula (102) of the present embodiment, with formula (101) shown as a dotted line and formula (102) shown as a solid line, will be described below with reference to Figs. 13A and 13B.

As shown in Fig. 13B, with the configuration of this embodiment, the peak portion of the gain versus frequency appearing in the graph of the comparative example indicated by the dashed line is eliminated, and a single relatively gentle peak appears.

Consequently, in the region where high response performance is obtained, the occurrence of problems such as the peeling of the laminated portion of the piezoelectric element 36a due to a mechanically fatal resonance mode can be effectively suppressed. As a result, there is greater latitude in the selection of the designed vibration frequency than with the configuration of the comparative example.

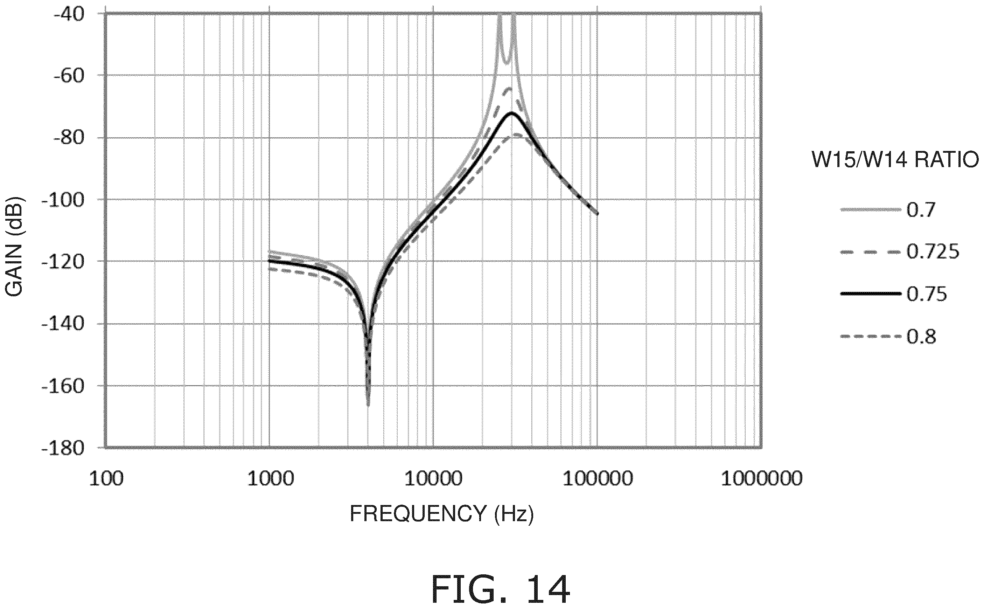

Also, in the above-mentioned mechanical elements, among the determined W12, W13, W14, W15, and W16, in the band where the maximum response of the characteristics of this embodiment shown in Fig. 13B is obtained, W14 and W15 are elements that in principle have the greatest effect on characteristics, and as such, in terms of design, they need to satisfy the following condition (see Fig. 14).

$$0.725 < W15/W14 < 0.8 \ \dots \ (2)$$

When this ratio (W15/W14) drops under 0.725, the response gain (vibration amplitude) decreases. On the other hand, when W15/W14 exceeds 0.8, there is a stronger tendency for the response gain (vibration amplitude) to oscillate, as shown in Fig. 14.

Based on the above results, it is preferable for the ratio indicated by W15/W14 to satisfy the above relational expression (2).

Embodiment 2

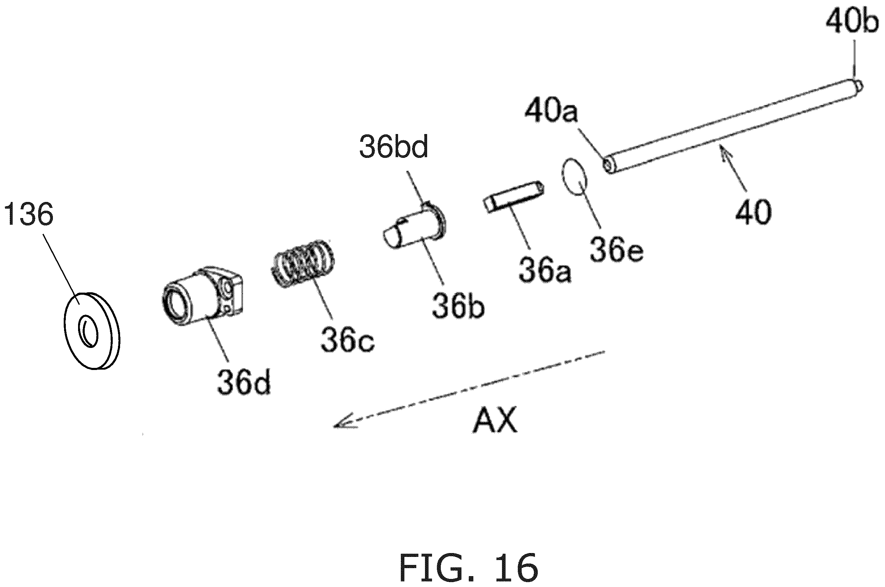

The configuration of an optical device actuator according to another embodiment of the present invention will now be described with reference to Figs. 16 to 19.

As shown in Fig. 16, the optical device actuator of this embodiment is mainly characterized in that a single weight unit 36b is combined with a washer (second weight) 136 to form a multi-stage weight structure, rather than the multi-stage weight unit 36b of the first embodiment.

With the configuration of this embodiment, the weight unit 36b and the washer 136 are linked via an elastic element, thereby forming a multi-stage weight (first and second weights).

After the assembly of the piezoelectric element 36a, the weight unit 36b, the spring 36c, the holder 36d, the main shaft guide 40, etc., the inside diameter portion of the washer 136 is adhesively fixed (elastically supported) around the outer periphery of the distal end portion of the weight unit 36b protruding from the center hole of the holder 36d.

Consequently, the configuration of the comparative example without the washer 136 and the configuration of this embodiment in which the washer 136 is attached can be compared under roughly the same conditions.

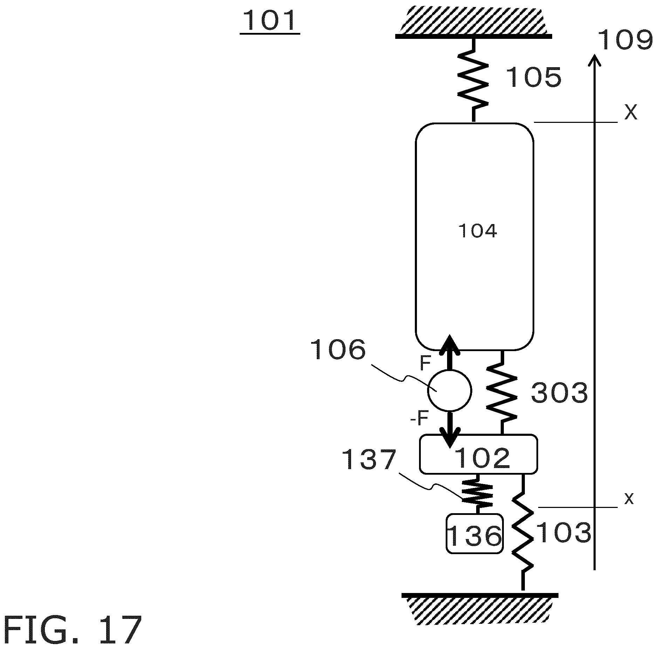

Fig. 17 is an equivalent vibration model, in which an experimental model is schematically represented. As shown in Fig. 17, the piezoelectric element 36a engages with the outer part, and the added washer 136 and an elastic adhesive (first elastic element) 137 are branches extending therefrom.

Therefore, except for the elastic adhesive (first elastic element) 137 and washer 136 that form the branches, the structure of this embodiment is exactly the same as the structure of the conventional example shown in Fig. 12B, and the basic structure of its characteristics (the shape of the frequency characteristics) are also similar.

Here, these added branch portions (the elastic adhesive (first elastic element) 137 and the washer 136) act as a kind of vibration damper (generally a structure called a dynamic vibration absorber) that is added to the structure of the conventional example, which moderates the sharp resonance points seen in the conventional example and narrows the prohibited area for setting the vibration frequency.

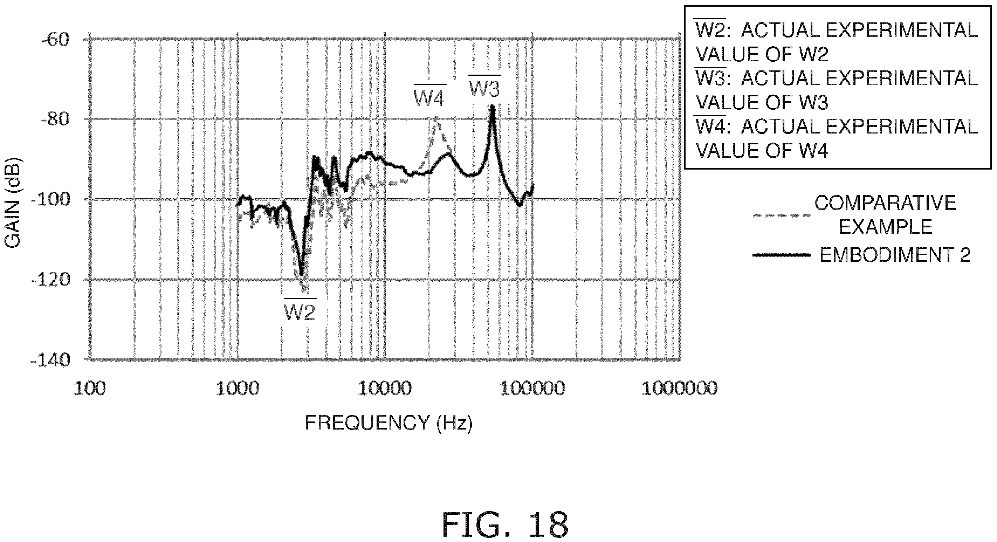

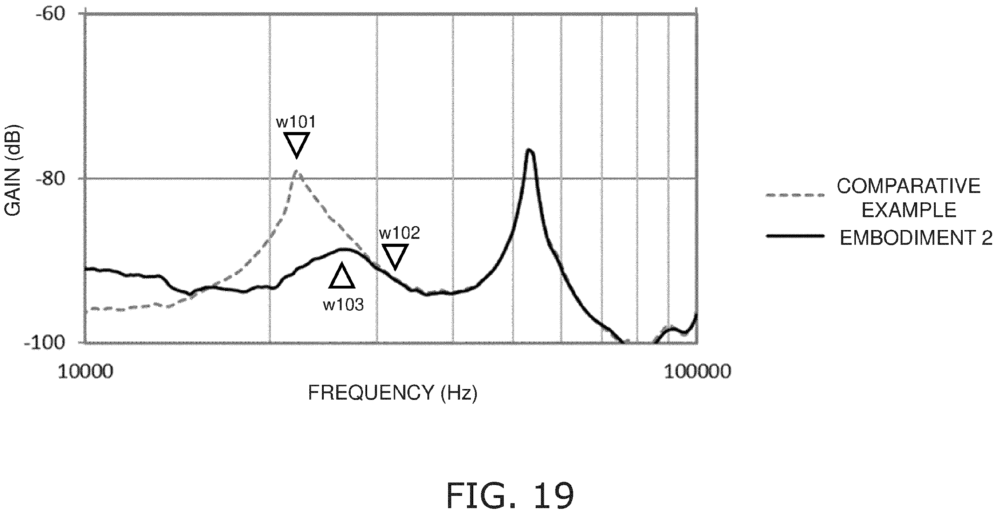

The characteristics of the configuration of this embodiment will now be described with reference to Figs. 18 and 19.

Fig. 18 shows the results of an experiment comparing the configuration of this embodiment with a comparative example.

In Fig. 18, the characteristics obtained with the configuration of this embodiment are indicated by a solid line, and the characteristics obtained with the configuration of the comparative example are indicated by a dashed line.

It can be seen from Fig. 18 that the extremely sharp resonance points that were so prominent in the comparative example indicated by the dashed line are moderated by the addition of the configuration of this embodiment (the washer 136 and the elastic adhesive 137), changing to a gentler slope in the graph.

Here, the first elastic element 137 and the washer 136 effectively moderate the resonance point of W4 in the frequency band that is used, but are not seen to have any effect on the resonance point of W3, which is a local vibration mode around the piezoelectric element in the high frequency band.

Next, Fig. 19 is an enlarged graph of the band portion actually used in the graph of Fig. 18.

As shown in Fig. 19, with the configuration of the comparative example, for the purpose of setting the drive frequency at a point far enough away from the resonance point w101 (22 kHz), the drive frequency is set to w102 (33 kHz), with about 1.5 times (or 0.67 times) being preferable from a design standpoint.

On the other hand, in this embodiment, in principle, it is also possible to set the drive frequency to w103 (27 kHz).

With the configuration of this embodiment, the amplitude ratio compared to the comparative example is +4.5 dB (1.7 times), which indicates the possibility of obtaining a large amplitude.

As discussed above, the configuration of this embodiment allows a stepped structure to be very simply added to a conventional method to achieve an improvement in the amount of amplitude, to the extent discussed above.

Other Embodiments

Embodiments of the present invention were described above, but the present invention is not limited to or by the above embodiments, and various modifications are possible without departing from the gist of the disclosure.

(A)

In the above embodiments, an example was given in which the weight unit 36b had a two-stage structure including the first weight 36ba and the second weight 36bb. However, the present invention is not limited to this.

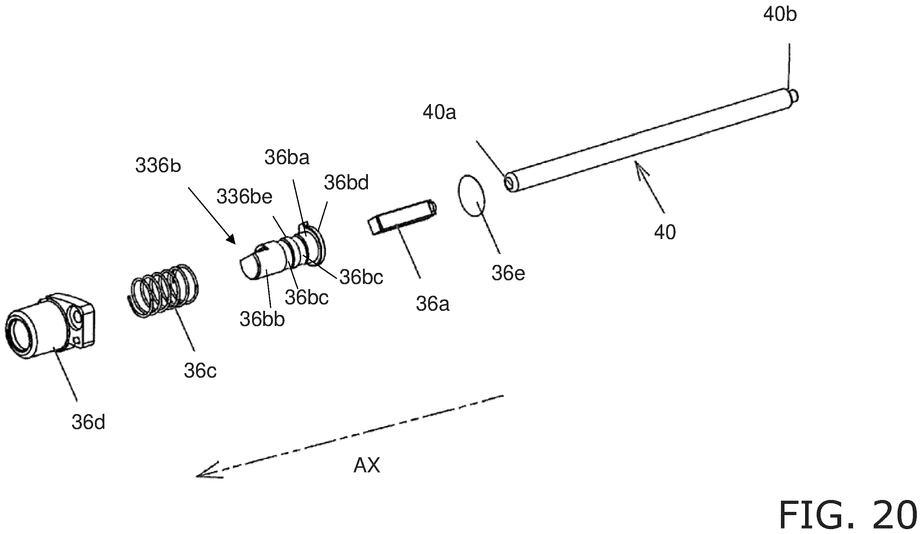

For example, as shown in Fig. 20, the configuration may be such that there are three or more stages, such as a weight unit 336b having two small diameter portions 36bc between two first weights 36ba and two second weights 36bb, and a third weight 36be is provided between the two small diameter portions 36bc.

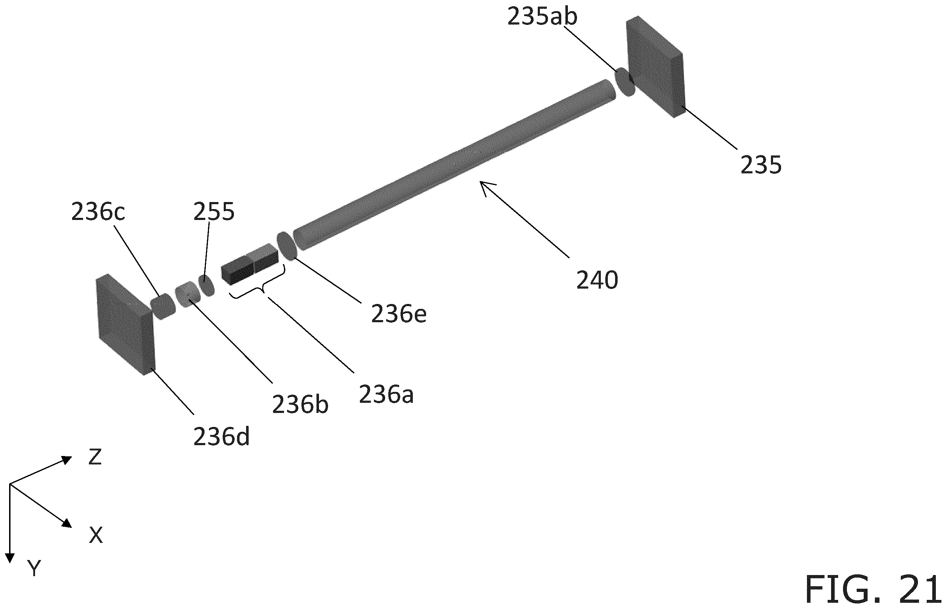

More specifically, a configuration having three or more stages will be described below with reference to Figs. 21 to 24.

When the number of stages is increased, the above-mentioned response equation goes to a higher order (8th order equation, 10th order equation), so the calculation ends up being more complicated. Here, as a third embodiment, the significance of using three stages will be described using simulation results.

Fig. 21 shows an abstract model of the configuration of a conventional example (Patent Application No. 2020-566172) used for simulation.

In Fig. 21, 240 is a main shaft guide model corresponding to the main shaft guide 40. Similarly, 236e is a cushioning sheet model corresponding to the cushioning sheet 36e. 236a is a piezoelectric element model corresponding to the piezoelectric element 36a. 236b is a weight unit model corresponding to the weight unit 36b. 235 is a frame model A fixed to an absolute coordinate system in the simulation. 236d is a frame model B fixed to an absolute coordinate system in the simulation. 255 denotes an adhesive joint model, in which the piezoelectric element model 236a and the weight unit model 236b are adhesively bonded. 235ab is a main shaft elastic body model, in which the main shaft guide 240 and the frame model A 235 are elastically bonded. 236c is a spring elastic element model, in which the weight unit model 236b and the frame model B 236d are elastically bonded.

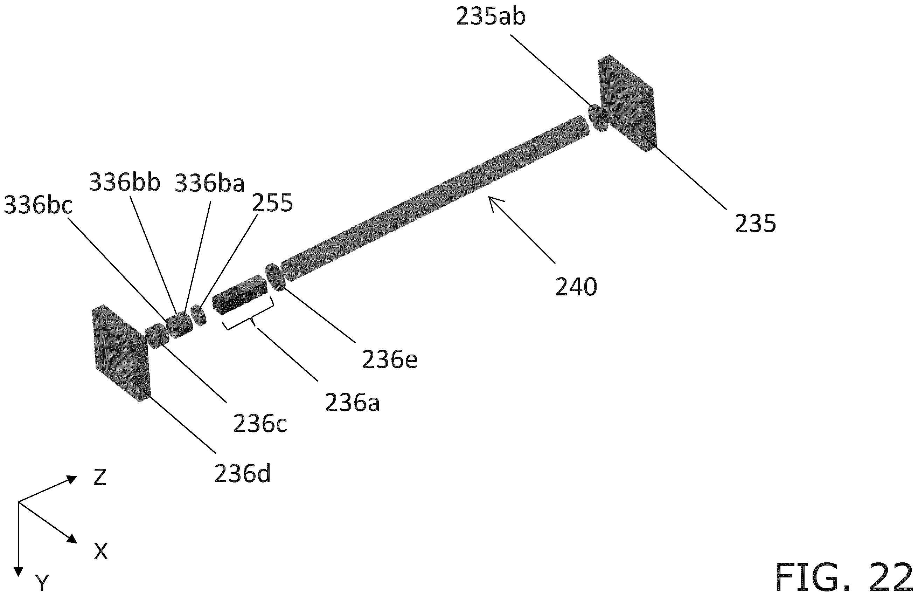

Fig. 22 shows a simulation model of this embodiment, which has a configuration in which the weight unit model 236b shown in Fig. 21 is divided in three (three-stage).

In the configuration shown in Fig. 22, 336ba is a first weight unit model, 336bb is a second weight unit model, and 336bc is a third weight unit model.

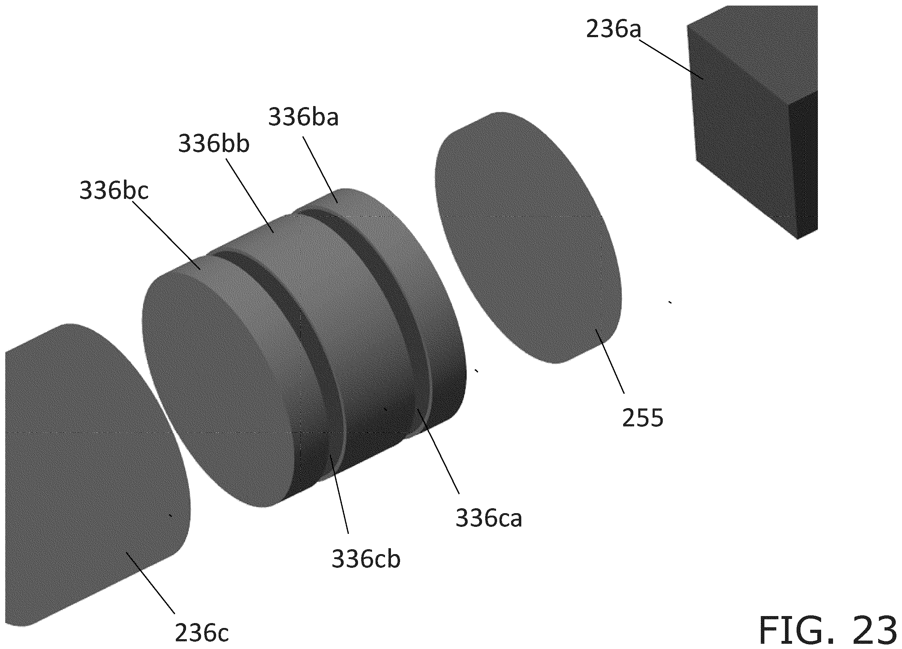

Fig. 23 is a detail view of the divided first to third weight unit models 336ba, 336bb, and 336bc included in Fig. 22.

The first weight unit model 336ba is adhesively bonded to the piezoelectric element model 236a at its first end by the adhesive bond model 255, and is elastically linked to the elastic body model 336ca at the second end on the opposite side from the first end.

The second weight unit model 336bb is elastically linked to the first elastic body model 336ca at its first end, and is elastically linked to the second elastic body model 336cb at the second end on the opposite side from the first end.

The third weight unit model 336bc is elastically linked to the second elastic body model 336cb at its first end, and is elastically linked to the spring elastic element model 236c at the second end on the opposite side from the first end.

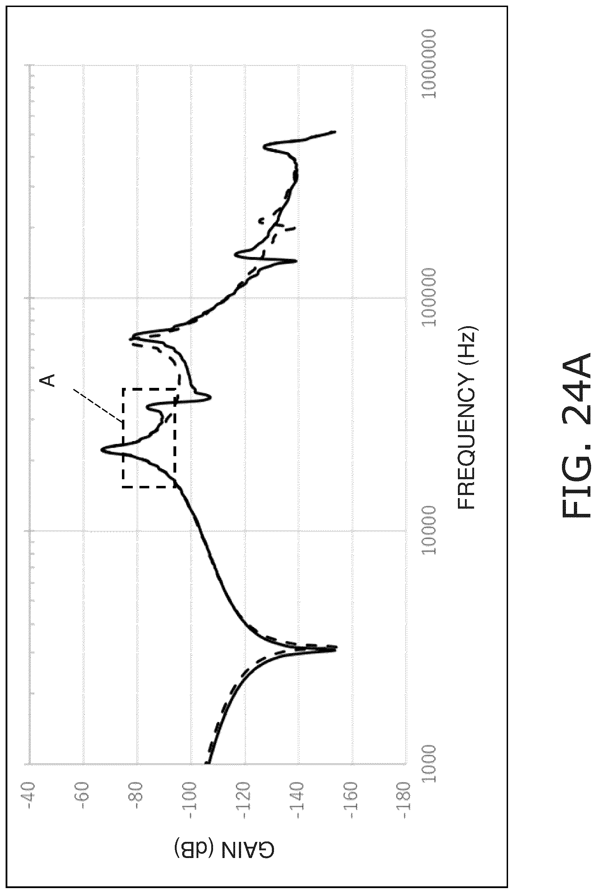

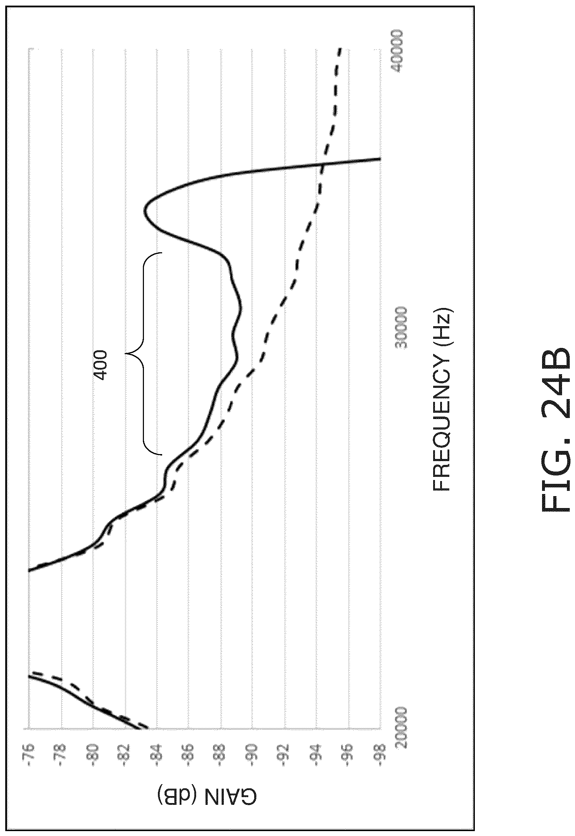

Figs. 24A and 24B show the responsiveness of the simulation model in this embodiment.

In Figs. 24A and 24B, the results of this embodiment are shown by solid lines, and the characteristics of the conventional example are shown by dashed lines.

Fig. 24A shows that in this embodiment, a local gain change is seen near the target vibration frequency of 30 kHz (see the dashed line A in the figure). Fig. 24B is a detail view of the area near 30 kHz in Fig. 24A.

In Fig. 24B, it can be seen that the above-mentioned local change in gain creates a local flat portion 400 (stable region) in comparison with the characteristics in the conventional example (dotted line).

In this flat region, an increase in vibration of about 3 to 5 dB (1.4 to 1.8 times) is observed as compared to the characteristics in the conventional example (dotted line).

It can be seen from the above simulation results that a configuration with three stages of weight units also yields significant characteristics.

In an actual design, rubber, elastic resin, or the like may be used as the elastic element linking the multi-stage multiple weights, for example.

(B)

In the above embodiments, an example was given in which the first weight 36ba had a larger mass than the second weight 36bb (2/3 and 1/3 the mass of the weight unit 36b). However, the present invention is not limited to this.

For example, the multi-stage weight units may have equal masses, or the multi-stage weight units may be configured to have a difference in a ratio other than 2:1.

(C)

In the above embodiment, an example was given in which a constricted portion (small diameter portion 36bc) having thinner walls and lower rigidity than the first weight 36ba and the second weight 36bb was used as the elastic element linking the first weight 36ba and the second weight 36bb. However, the present invention is not limited to this.

For example, rubber, elastic resin, or the like may be used as the elastic element that links the multi-stage multiple weights.

(D)

In the above embodiment, an example was given in which the cushioning sheet 36e was provided between the end surface on the first end 40a side of the main shaft guide 40 and the end surface of the piezoelectric element 36a opposite thereto. However, the present invention is not limited to this.

For example, the end surface on the first end 40a side of the main shaft guide 40 and the end surface of the piezoelectric element 36a opposite thereto may be fixed with an adhesive agent.

However, providing a cushioning material such as the cushioning sheet 36e between the end surface on the first end 40a side of the main shaft guide 40 and the end surface of the piezoelectric element 36a opposite thereto as in the above embodiment effectively prevents damage to the connected portion between the end surface on the first end 40a side of the main shaft guide 40 and the end surface of the piezoelectric element 36a opposite thereto.

(E)

In the above embodiment, an example was given in which the second end 40b side of the main shaft guide 40 was press-fitted and fixed in the press-fitting hole 35a of the guide holding frame 35. However, the present invention is not limited to this.

For example, the fixing of the second end side of the main shaft guide is not limited to press-fitting, and this fixing may instead be accomplished with an adhesive agent or the like.

(F)

In the above embodiment, an example was given in which the optical device actuator of the present invention was applied to the third and fourth lens group unit 14 included in the lens barrel 10 equipped with a plurality of lens groups. However, the present invention is not limited to this.

What the optical device actuator according to the present invention is applied to is not limited to the fourth lens group unit of a lens barrel, for example, and may instead be an actuator that drives an image sensor or some other movable frame.

(G)

In the above embodiment, an example was given in which vibration was applied from the vibration application mechanism 36 to the main shaft guide 40 in a direction substantially parallel to the axial direction of the main shaft guide 40. However, the present invention is not limited to this.

When reducing dynamic friction resistance, for example, the vibration applied from the vibration application component to the main shaft guide may be applied in a direction intersecting the axial direction.

(H)

In the above embodiment, an example was given in which ultrasonic vibration was applied from the vibration application mechanism 36 to the main shaft guide 40. However, the present invention is not limited to this.

The vibration applied from the vibration application component is not limited to ultrasonic vibration, and any vibration that will reduce the frictional resistance between a movable frame and a main shaft guide may be applied, such as audible vibration.

Also, the ultrasonic vibration applied from the vibration application component is not limited to the range of 20 to 60 kHz described in the above embodiments, and ultrasonic vibration outside that range may be applied instead.

(I)

In the above embodiment, an example was given in which a solenoid spring was used as the elastic member, but the present invention is not limited to this.

For example, some other elastic member such as a leaf spring may be used in place of a solenoid spring. That is, there are no particular restrictions on the elastic member so long as it presses the guide shaft in the axial direction.

(J)

In the above embodiment, an example was given of a configuration in which a part of the fixed frame 30 serving as the first frame was provided as a separate member from the guide holding frame 35 serving as the second frame. However, the present invention is not limited to this.

For example, the configuration may be such that the first frame and the second frame are integrated.

(K)

In the above embodiment, an example was given in which anti-vibration grease was applied to the spring 36c, but the present invention is not limited to this.

For example, it is not essential to coat elastic members such as springs with anti-vibration grease.

INDUSTRIAL APPLICABILITY

The optical device actuator according to the present invention exhibits the effect that malfunction of a piezoelectric element due to resonance can be effectively prevented while ensuring high response characteristics, and therefore can be broadly applied as an actuator that is installed in various kinds of optical device.

REFERENCE SIGNS LIST

10 lens barrel
11 first lens group unit
12 second lens group unit
13 cam frame
14 third and fourth lens group unit
16 fifth lens group unit
17 exterior unit
18 base ring
30 fixed frame (first frame)
30a insertion hole
31 main yoke
32 magnet (drive unit)
33 movable frame
33a main shaft bearing
33b sub-shaft bearing
33c drive coil (drive unit)
33d main body part
34 counter yoke
35 guide holding frame (second frame)
35a press-fitting hole
35b groove portion
36 vibration application mechanism (vibration application component)
36a piezoelectric element (vibration application component)
36b weight unit
36ba first weight
36bb second weight
36bc small diameter portion (first elastic element)
36bd flange
36c spring (elastic member)
36d holder (first frame)
36e cushioning sheet (cushioning material)
40 main shaft guide (guide shaft)
40a first end
40b second end
41 sub-shaft guide
51 control unit
52 position sensor
53 sensor magnet
55 coil terminal portion
101 vibration application mechanism
103 weight unit
104 spring
105 main shaft guide
106 groove portion
107 piezoelectric element
109 axial direction
136 washer (second weight)
137 elastic adhesive (first elastic element)
336b weight unit
336be third weight
AX optical axis
d Gap
F1 Lorentz force
L11 focus lens
M magnetic force

**Claims**

1. An optical device actuator, comprising:

a movable frame that includes a lens;
a guide shaft configured to support the movable frame so as to be movable along an optical axis of the lens;
a vibration application component configured to apply vibration to a side of a first end of the guide shaft;
a first weight that is fixed to the vibration application component in an axial direction of the guide shaft;
a first elastic element that is fixed to an end of the first weight on an opposite side from the vibration application component in the axial direction of the guide shaft and has an elasticity;
a second weight that is fixed to the first weight in the axial direction of the guide shaft via the first elastic element;
a first frame configured to support the vibration application component, the first weight, the first elastic element, and the second weight disposed on the side of the first end of the guide shaft; and
an elastic member that is provided on the side of the first end of the guide shaft and is configured to press the vibration application component in the axial direction against the first end of the guide shaft via the first weight, the first elastic element, and the second weight.

2. The optical device actuator according to claim 1,
wherein the first weight has a different mass from the second weight.

3. The optical device actuator according to claim 1 or 2, further comprising:

a third weight that is provided between the first elastic element and the second weight in the axial direction of the guide shaft and is fixed to the end of the first elastic element on the opposite side from the first weight; and
a second elastic element that connects the third weight and the second weight in the axial direction of the guide shaft and has an elasticity.

4. The optical device actuator according to claim 1 or 2,
further comprising a second frame configured to support, in a fixed state, a side of a second end of the guide shaft on the opposite side from the side of the first end of the guide shaft.

5. The optical device actuator according to claim 1 or 2,
further comprising a shock absorbing material that is disposed between the first end of the guide shaft and the vibration application component.

6. The optical device actuator according to claim 5,
wherein the shock absorbing material is formed in a sheet shape.

7. The optical device actuator according to claim 4,
wherein the second frame has a press-fitting hole into which the second end of the guide shaft is fixed and supported by press-fitting.

8. The optical device actuator according to claim 7,
wherein the second frame further has a groove portion formed concentrically with the press-fitting hole on an outer peripheral side of the press-fitting hole.

9. The optical device actuator according to claim 1 or 2,
wherein the elastic member is disposed between the second weight and the first frame.

10. The optical device actuator according to claim 9,
wherein the elastic member is a solenoid spring.

11. The optical device actuator according to claim 1 or 2,
wherein the elastic member is coated with anti-vibration grease.

12. The optical device actuator according to claim 1 or 2,
wherein the first end of the vibration application component on an opposite side from a side connected to the guide shaft is adhesively fixed to the first weight.

13. The optical device actuator according to claim 1 or 2,
    wherein the vibration application component applies vibration to the first end of the guide shaft in the axial direction of the guide shaft.

14. The optical device actuator according to claim 1 or 2,
    wherein the vibration application component is a piezoelectric element.

15. The optical device actuator according to claim 1 or 2,
    wherein the lens is a focus lens.

16. A lens barrel comprising:

    the optical device actuator according to claim 1 or 2; and
    a plurality of lens groups disposed so that a direction of the optical axis is aligned with that of the lens.

FIG. 1

FIG. 2

FIG. 3

FIG. 4

FIG. 5

14

F1  31  M  32

C

41

AX

33

33c

34

33d

C

F1  M  32  31

SECTION J—J

X AXIS
⊗ → Y AXIS

Z AXIS

FIG. 6

FIG. 7

SECTION L—L

FIG. 8

36b    36ba    36bd    40a    40b

36c

36d    36bb    36bc    36a    36e    40

AX

FIG. 9

FIG. 10

FIG. 11

FIG. 12A

FIG. 12B

EP 4 513 245 A1

FIG. 13A

FIG. 13B

EP 4 513 245 A1

FIG. 14

FIG. 15

FIG. 16

EP 4 513 245 A1

FIG. 17

FIG. 18

EP 4 513 245 A1

FIG. 19

FIG. 20

FIG. 21

FIG. 22

FIG. 23

FIG. 24A

FIG. 24B

## INTERNATIONAL SEARCH REPORT

| International application No. |
|---|
| **PCT/JP2022/040141** |

### A. CLASSIFICATION OF SUBJECT MATTER

*G02B 7/04*(2021.01)i; *G02B 7/08*(2021.01)i; *H02N 2/04*(2006.01)i
FI: G02B7/04 E; G02B7/08 B; H02N2/04

According to International Patent Classification (IPC) or to both national classification and IPC

### B. FIELDS SEARCHED

Minimum documentation searched (classification system followed by classification symbols)

G02B7/02-7/16 H04N5/222-5/257

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/149108 A1 (PANASONIC INTELLECTUAL PROPERTY MANAGEMENT CO., LTD.) 23 July 2020 (2020-07-23) <br> entire text, all drawings | 1-16 |
| A | WO 2019/146771 A1 (PANASONIC INTELLECTUAL PROPERTY MANAGEMENT CO., LTD.) 01 August 2019 (2019-08-01) <br> entire text, all drawings | 1-16 |
| A | JP 2010-74912 A (KONICA MINOLTA OPTO, INC.) 02 April 2010 (2010-04-02) <br> entire text, all drawings | 1-16 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 December 2022** | **10 January 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/040141**

| Patent document cited in search report | | | Publication date (day/month/year) | Patent family member(s) | | | Publication date (day/month/year) |
|---|---|---|---|---|---|---|---|
| WO | 2020/149108 | A1 | 23 July 2020 | US | 2022/0163752 | A1 | |
| | | | | entire text, all drawings | | | |
| | | | | EP | 3913415 | A1 | |
| | | | | CN | 113272701 | A | |
| WO | 2019/146771 | A1 | 01 August 2019 | US | 2021/0048682 | A1 | |
| | | | | entire text, all drawings | | | |
| JP | 2010-74912 | A | 02 April 2010 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014091656 A
- WO 2020566172 A